# EUROPÄISCHE PATENTSCHRIFT

(11) **EP 0 470 402 B1**
(45) Veröffentlichungstag und Bekanntmachung des Hinweises auf die Patenterteilung: **07.06.1995**
(21) Anmeldenummer: 91111827.1
(22) Anmeldetag: 16.07.1991
(51) Int. Cl.: G01D 11/24, H05K 5/00

(54) **Prüfvorrichtung**
Testing device
Dispositif d'essai

(30) Priorität: 10.08.1990 DE 4025417
(43) Veröffentlichungstag der Anmeldung: 12.02.1992
(73) Patentinhaber: ROBERT BOSCH GMBH, 70442 Stuttgart (DE)
(72) Erfinder: Lachenmayer, Horst, W-7000 Stuttgart 60 (DE); Traub, Gerhard, Dipl.-Ing., W-7441 Unterensingen (DE); Froehlich, Michael, Dipl.-Ing., W-7312 Kirchheim/Teck (DE); Tetur, Frantisek, Dipl.-Ing., W-7333 Ebersbach/Fils (DE)

(56) Entgegenhaltungen:
- DE-A- 2 409 236
- DE-U- 7 243 145
- DE-U- 8 710 985
- DE-U- 8 800 717
- US-A- 4 173 941
- US-A- 4 920 799

## Beschreibung

### Stand der Technik

Die Erfindung geht aus von einer Vorrichtung zum Prüfen von mechanischen oder elektrischen Teilen nach der Gattung des unabhängigen Anspruchs.

Aus der EP-A 0 047 813 ist ein Prüfsystem bekannt, das aus unterschiedlichen Meßgeräten zusammensetzbar ist, deren Abmessungen ein Teil oder ein Vielfaches einer Grundrastereinheit entsprechen und die über steckbare Kabelverbindungen zusammenschaltbar sind. Die Geräte des Prüfsystems sind einerseits als Einzelgeräte für sich betreibbar und andererseits ist über die Verbindungsleitungen eine Steuerung der einzelnen Geräte von einer zentralen Steuereinheit möglich, die in einem der Geräte integriert ist. Mit diesen Maßnahmen ist eine Reduzierung der erforderlichen elektronischen Baugruppen möglich, da einige Baugruppen nur einmal in einem Gerätesystem vorhanden sein müssen. Die einzelnen Geräte enthalten Bedienelemente sowie Ein- und Ausgabevorrichtungen, die auf den Gerätevorderseiten und Geräterückseiten fest vorgegeben sind.

Aus dem DE-U 87 10 985.9 ist ein elektronisches Meßgerät mit einer Anzeige- und Bedieneinheit bekannt, das mit einer abnehmbaren Frontseite ausgestattet ist. Die abnehmbare Frontseite, die an einer leicht zugänglichen Stelle angeordnet werden kann, ist mit dem Gehäuse, das eine signalverarbeitende Anordnung enthält, mit einem Kabel verbindbar.

Der Erfindung liegt die Aufgabe zugrunde, eine Vorrichtung zum Prüfen von mechanischen oder elektrischen Teilen anzugeben, bei der die Vielseitigkeit eines Gerätes erhöht ist.

Diese Aufgabe wird durch die im unabhängigen Anspruch angegebenen Merkmale gelöst.

### Vorteile der Erfindung

Die erfindungsgemäße Vorrichtung enthält ein Gehäuse, in dem eine signalverarbeitende Anordnung zur Aufbereitung und Verarbeitung des von wenigstens einem Sensor abgegebenen Signals vorhanden ist. Das Gehäuse ist über ein Drehlager mit einem Tragegestell verbunden, das eine Ablage für die Sensoren mit den Leitungen oder für Kleinteile enthält. Das Gehäuse enthält ein vorderes und/oder ein hinteres Abschlußteil, die jeweils zumindest teilweise austauschbar sind gegen andersartige Abschlußteile, die jeweils unterschiedliche Bedienelemente enthalten. Zwischen den austauschbaren vorderen und/oder hinteren Abschlußteilen, die Bedienelemente enthalten, und der im Gehäuse vorhandenen signalverarbeitenden Anordnung ist eine Signalkopplung vorgesehen.

Die Austauschbarkeit des vorderen und/oder hinteren Abschlußteils der erfindungsgemäßen Vorrichtung erhöht deren Flexibilität. Auf diese Weise sind kostengünstig unterschiedliche Ausbaustufen realisierbar. Das Tragegestell mit dem Drehlager ermöglicht eine Aufstellung der erfindungsgemäßen Vorrichtung in der Nähe der zu prüfenden mechanischen oder elektrischen Teile, wobei das Drehlager eine Verschwenkbewegung in eine günstige Blickrichtung für die bedienende Person ermöglicht. Die Austauschbarkeit des vorderen und/oder hinteren Abschlußteils der erfindungsgemäßen Vorrichtung bringt es mit sich, daß eine Vielzahl von Sensoren anschließbar ist. Die vorhandene Ablage ermöglicht in diesem Zusammenhang eine weitere Vereinfachung der Handhabung.

Eine minimale Ausbaustufe sieht vor, daß das vordere Abschlußteil und/oder das hintere Abschlußteil des Gehäuses keine Bedienelemente oder sonstige Vorrichtungen aufweist. Diese einfache und kostengünstige Ausgestaltung ermöglicht bereits einen Prüfbetrieb, bei dem beispielsweise ein im Gehäuse angeordneter akustischer Signalgeber die Erfüllung einer Prüfvorschrift signalisieren kann. Ferner ist es möglich, die vorverarbeiteten Signale über eine Verbindungsleitung zu einem größeren Prüfsystem weiterzuleiten, das umfangreiche Bedienmöglichkeiten aufweist.

Die erfindungsgemäße Vorrichtung zum Prüfen von mechanischen oder elektrischen Teilen eignet sich insbesondere zur Diagnose von Kraftfahrzeugen oder Fahrzeugbestandteilen. Vorteilhaft sind die kurzen Signalwege zwischen dem wenigstens einen Sensor und der signalverarbeitenden Anordnung, die zumindest eine Signalvorverarbeitung auf einen gegenüber Störsignalen unempfindlichen Pegel vornimmt.

Es ist die vorteilhafte Möglichkeit vorgesehen, die erfindungsgemäße Vorrichtung mit einer Aufhängevorrichtung zu versehen, die eine Befestigung an einem Ausleger eines großen Prüfstandes ermöglicht. Das im oder am Ausleger verlegte Kabel zwischen der erfindungsgemäßen Vorrichtung und den im Prüfsystem vorhandenen Geräten führt beispielsweise genormte Strom- oder Spannungspegel, die in einem gegenüber Störungen unempfindlichen Bereich liegen.

In einer weiteren Ausgestaltung enthält das vordere Abschlußteil eine Eingabe- und Anzeigevorrichtung, wobei die Anzeigevorrichtung zumindest alphanumerische Zeichen darstellen kann. In dieser Ausgestaltung ist die erfindungsgemäße Vorrichtung als eigenständiges Gerät bereits universell einsetzbar. Über die Anzeigevorrichtung können beispielsweise die eingegebenen Daten und Befehlen sowie die von der signalverarbeitenden Anordnung ermittelten Meßwerte angezeigt werden.

Eine weitere Ausgestaltung sieht vor, daß das vordere Abschlußteil neben der Eingabe- eine grafische Anzeigevorrichtung enthält. Neben der Wiedergabe von alphanumerischen Zeichen ermöglicht die grafische Anzeige die Wiedergabe von Signalverläufen.

Eine vorteilhafte weitere Ausgestaltung sieht die Unterbringung von Ein- und/oder Ausgabevorrichtungen im hinteren Abschlußteil des Gehäuses vor. Als Eingabevorrichtung ist beispielsweise ein Massenspeicher vorgesehen. Als Ausgabevorrichtung ist beispielsweise ein Drucker vorgesehen, der das Prüfergebnis protokolliert.

Die vorderen und hinteren Abschlußteile des Gehäuses werden vorzugsweise mit Schnappverschlüssen an dem Gehäuse befestigt. Diese Maßnahme gewährleistet einen einfachen Austausch der verschiedenen zur Verfügung stehenden Abschlußteile.

Vorteilhafte Weiterbildungen und Verbesserungen der erfindungsgemäßen Vorrichtung ergeben sich aus abhängigen Ansprüchen in Verbindung mit der folgenden Beschreibung.

### Zeichnung

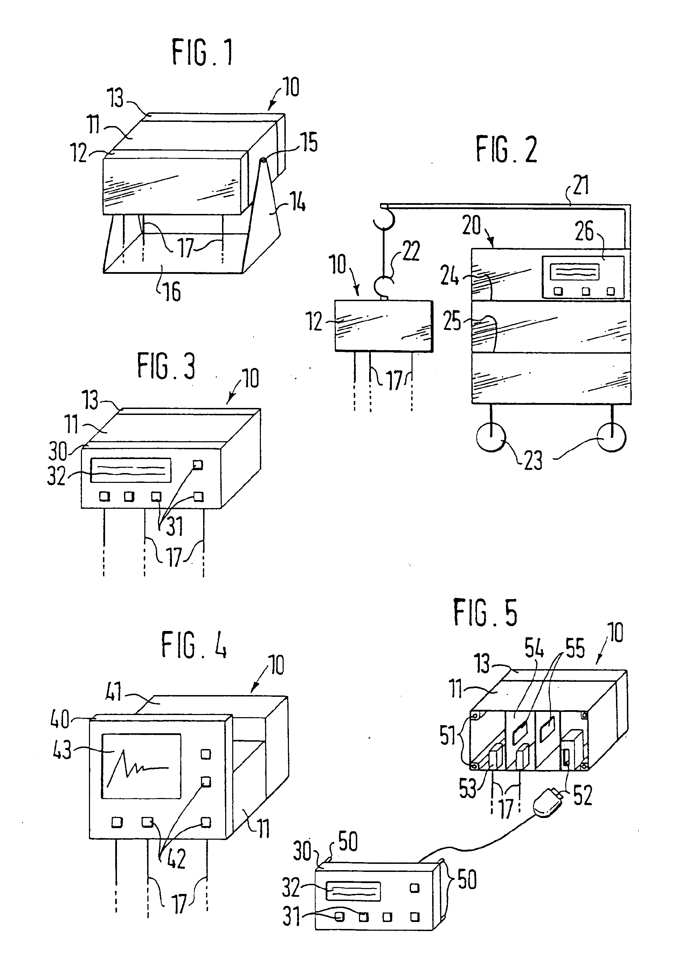

Figur 1 zeigt eine erfindungsgemäße Vorrichtung 10 zum Prüfen von mechanischen oder elektrischen Teilen, eingebaut in ein Tragegestell mit Drehlager, Figur 2 zeigt eine erfindungsgemäße Vorrichtung im Zusammenwirken mit einem bekannten Prüfsystem, Figuren 3 und 4 zeigen vorteilhafte Ausgestaltungen eines vorderen und/oder eines hinteren Abschlußteils eines Gehäuses und Figur 5 zeigt eine erfindungsgemäße Vorrichtung mit einem Gehäuse und einem abgenommenen vorderen Abschlußteil.

Figur 1 zeigt eine erfindungsgemäße Vorrichtung zum Prüfen von mechanischen oder elektrischen Teilen, die ein Gehäuse 11 aufweist, das ein vorderes und hinteres Abschlußteil 12, 13 enthält. Das Gehäuse 11 ist in einem Tragegestell 14 angeordnet, wobei zwischen Gehäuse 11 und dem Tragegestell 14 jeweils ein Drehlager 15 vorgesehen ist. Das Tragegestell 14 enthält eine Ablage 16. Am Gehäuse 11 sind Leitungen 17 anschließbar, die zu Sensoren führen, die in Figur 1 nicht gezeigt sind.

In den Figuren 2, 3, 4 und 5 sind diejenigen Teile, die mit den in Figur 1 gezeigten Teilen übereinstimmen, jeweils mit denselben Bezugszahlen bezeichnet.

Figur 2 zeigt ein aus dem Stand der Technik bekanntes Prüfsystem 20, das einen Ausleger 21 enthält, an dem die erfindungsgemäße Vorrichtung 10 mit Hilfe einer Anhängevorrichtung 22 anbringbar ist. Das Prüfsystem 20 ist mit Rollen 23 ausgestattet, die ein Rangieren des relativ großen und schweren Systems 20 ermöglichen. Auf den beiden Einlegeböden 24, 25 ist wenigstens ein Prüfgerät 26 eingetragen, das mit der erfindungsgemäßen Vorrichtung 10 zusammenwirkt. Das Zusammenwirken erfolgt über eine in Figur 2 nicht gezeigte Kabelverbindung, die im oder am Ausleger 21 angebracht ist.

Figur 3 zeigt die erfindungsgemäße Prüfvorrichtung 10, bei der gegenüber der in Figur 1 gezeigten Ausgestaltung das vordere Abschlußteil Bedienelemente 31, 32 enthält. Als Bedienelemente sind eine Eingabevorrichtung 31 sowie eine Anzeige 32 vorgesehen, die wenigstens alphanumerische Zeichen darstellen kann.

Figur 4 zeigt eine weitere Ausgestaltung der erfindungsgemäßen Prüfvorrichtung 10, bei der gegenüber der in Figur 1 gezeigten Ausgestaltung sowohl das vordere als auch das hintere Abschlußteil 40, 41 Bedienelemente 42, 43 enthält; die hinteren Bedienelemente sind nicht dargestellt. Als Bedienelemente sind eine Eingabevorrichtung 42 sowie eine Anzeige 43 vorgesehen, die eine grafische Darstellung ermöglicht.

Figur 5 zeigt die erfindungsgemäße Prüfvorrichtung 10 mit abgenommenem vorderen Abschlußteil 30. In Figur 5 wurde beispielhaft das in Figur 3 gezeigte vordere Abschlußteil 30 gezeigt. Es können ebenso die anderen Abschlußteile 12, 40 Verwendung finden. Das vordere Abschlußteil 30 ist mittels Schnappverschlüssen 50, 51 mit dem Gehäuse 11 verbindbar. Zur bidirektionalen Signalübertragung zwischen dem vorderen Abschlußteil 30 und wenigstens einer im Gehäuse 11 angeordneten signalverarbeitenden Anordnung 55 ist in Figur 5 eine drahtgebundene Übertragungsstrecke vorgesehen, die eine Steckverbindung 52 aufweist.

Im Gehäuse 11 sind Teile von Steckverbindungen 53 gezeigt, an die die zu den Sensoren führenden Leitungen 17 anschließbar sind. Ferner sind im Gehäuse 11 angeordnete Platinen 54 gezeigt, die die wenigstens eine signalverarbeitende Anordnung 55 tragen.

Die erfindungsgemäße Prüfvorrichtung 10 wird anhand den in den Figuren 3 bis 5 gezeigten Ausführungsbeispielen näher erläutert:

Die erfindungsgemäße Vorrichtung 10 zum Prüfen von mechanischen oder elektrischen Teilen ist als ein tragbares Gerät ausgebildet. Die Verbindungsleitungen 17 zwischen der Vorrichtung 10 und den in den Figuren nicht gezeigten Sensoren zum Erfassen der mechanischen oder elektrischen Größen, die wenigstens zum Teil niedrige störungsempfindliche Signalpegel aufweisen, sind daher so kurz wie möglich zu halten. Ferner ist die erfindungsgemäße Prüfvorrichtung 10 in einer zur Bedienperson günstigen Lage zu positionieren. In einer Ausgestaltung ist das Tragegestell 14 vorgesehen, das das Gehäuse 11 über Drehlager 15 trägt. Das Tragegestell 14 kann die Ablage 16 enthalten auf der beispielsweise benötigte Kleinteile oder die in den Figuren nicht gezeigten Sensoren mit den Anschlußleitungen 17 abgelegt werden können.

Die Leitungen 17 sind über die in Figur 5 gezeigten Steckverbindungen 53, die im Gehäuse 11 angeordnet sind, mit der wenigstens einen signalverarbeitenden Anordnung 55 verbindbar, die ebenfalls im Gehäuse 11, beispielsweise auf Platinen 54 untergebracht sind. Die signalverarbeitende Anordnung 55 enthält eine Signalaufbereitungsschaltung für die von den Sensoren abgebenen Signale sowie wenigstens eine Signalvorverarbeitung.

In Figur 1 ist die Prüfvorrichtung 10 mit einem vorderen und hinteren Abschlußteil 12, 13 gezeigt, das keine Bedienelemente enthält. In dieser Ausgestaltung kann die Prüfvorrichtung ebenfalls als eigenständiges Gerät verwendet werden, wobei beispielsweise ein im Gehäuse 11 angeordneter akustischer Signalgeber das Überschreiten von Grenzwerten der von den Sensoren angegebenen Signale akustisch wiedergibt.

Vorzugsweise wird in dieser Ausgestaltung die erfindungsgemäße Prüfvorrichtung als abgesetztes Peripheriegerät verwendet, dessen Bedienelemente an zentraler Stelle angeordnet sind. Eine derartige Anordnung ist in Figur 2 gezeigt. Die erfindungsgemäße Prüfvorrichtung 10 weist - wie gesagt - die Aufhängevorrichtung 22 auf, mit der die Vorrichtung 10 an dem Ausleger 21 des größeren Prüfsystems 20 befestigt wird. Ein auf einem Einlegeboden 24, 25 des Prüfsystems 20 abgestelltes Prüfgerät 26 enthält die für die erfindungsgemäße Prüfvorrichtung 10 vorgesehenen Bedienelemente. In der Vorrichtung 10 findet eine Signalerfassung sowie Signalvorverarbeitung statt, so daß über die in Figur 2 nicht gezeigte Verbindungsleitung zwischen Vorrichtung 10 und Prüfgerät 26 Signale mit hohem störungsunempfindlichen Pegel oder beispielsweise als genormte Signale übertragen werden.

In vielen Anwendungen ist das größere Prüfsystem 20 nicht erforderlich. Die erfindungsgemäße Prüfvorrichtung 10 weist deshalb den großen Vorteil auf, daß sowohl das vordere und/oder das hintere Abschlußteil 12, 13 des Gehäuses 11 abgenommen und gegen andere Abschlußteile ausgetauscht werden kann, die Bedienungselemente enthalten. In Figur 3 ist eine Ausgestaltung gezeigt, bei der das vordere Abschlußteil 30 als Bedienelemente die Eingabevorrichtung 31 sowie die Anzeige 32 aufweist, wobei die Anzeige 32 alphanumerische Zeichen wiedergeben kann. Die Anzeige 32 ermöglicht somit beispielsweise eine Benutzerführung durch Textausgabe, eine Anzeige von eingegebenen Solloder Vergleichswerten sowie eine Ausgabe von Meßwerten. Ein Austausch des in Figur 1 gezeigten vorderen Abschlußteil 12 gegen das in Figur 3 gezeigte Teil 30 ist besonders einfach, wenn die in Figur 5 gezeigte Schnappverschlüsse 50, 51 vorgesehen sind, die ein schnelles Auswechseln der Teile sowie einen sicheren Halt gewährleisten.

Zur Signalübertragung zwischen den im vorderen Abschlußteil 30 angeordneten elektronischen Komponenten und der im Gehäuse 11 angeordneten signalverarbeitenden Anordnung 55 ist beispielsweise die Steckverbindung 52 vorgesehen. Besonders geeignet ist eine drahtlose Signalübertragung, die die Handhabung nochmals vereinfacht.

In Figur 4 ist anstelle des vorderen Abschlußteils 12 ohne Bedienelemente das Abschlußteil 40 vorgesehen, das als Bedienelemente die Eingabevorrichtung 42 sowie die grafische Anzeige 43 enthält. Die grafische Anzeige 43 ermöglicht nicht nur die Ausgabe von Zahlen oder Text sondern gestattet auch die Wiedergabe von Signalverläufen. Das hintere Abschlußteil 13 von Figur 1 ist in Figur 4 gegen das Abschlußteil 41 ausgetauscht. Das hintere Abschlußteil 41 enthält beispielsweise in der Figur nicht gezeigte Ein- und Ausgabevorrichtungen. Als Eingabevorrichtung ist beispielsweise ein Massenspeicher wie Floppy-Disk oder CD-ROM vorgesehen. Als Ausgabeeinrichtung ist beispielsweise ein Drucker vorgesehen, der den Meßablauf sowie die Meßergebnisse protokolliert.

Die Bautiefen der vorderen Abschlußteile 12, 30, 40 sowie der hinteren Abschlußteile 13, 41 sind so gering wie möglich gehalten. Als Anzeigen 32, 43 sind beispielsweise ein Flüssigkristall- oder Elektrolumineszenz-Display vorgesehen, die sehr geringe Tiefe aufweisen. Die Breiten sind derart gewählt, daß zumindest teilweise ein Austausch der Abschlußteile möglich ist. Der verbleibende Teil ist in diesen Fällen entweder ebenfalls mit anderen Austausch-Abschlußteilen versehbar oder enthält fest montierte Abschlußteile. Die Höhe ist in allen Fällen zumindest gleich der Höhe des Gehäuses 11.

## Patentansprüche

1. Tragbare Vorrichtung zum Prüfen von mechanischen oder elektrischen Teilen mit
- einem Tragegestell (14), das eine Ablage für die Sensoren mit Leitungen (17) oder für Kleinteile enthält,
- einem Gehäuse (11), das über Drehlager (15) mit dem Tragegestell (14) verbunden ist, und das ein vorderes (12, 30, 40) und ein hinteres Abschlußteil (13, 41) enthält,
- einer in dem Gehäuse (11) angeordneten signalverarbeitenden Anordnung (55) zur Aufbereitung eines von wenigstens einem Sensor abgegebenen Signals,
- wobei das vordere Abschlußteil (12, 30, 40) und/oder das hintere Abschlußteil (13,41) zumindest teilweise gegen andere Abschlußteile austauschbar ist/sind,
- wobei die Vorrichtung gegeneinander austauschbare Abschlußteile (12, 30, 40;13, 41) in unterschiedlichen Ausbaustufen mit Bedienelementen (31,32, 42, 43), wie Eingabe-, Ausgabe- und/oder Anzeigevorrichtungen, jeweils unterschiedlicher Funktion umfaßt,
- und wobei zwischen Abschlußteilen (30, 40; 41), die Bedienelemente (31, 32, 42, 43) enthalten, und der signalverarbeitenden Anordndung (55) eine Signalkopplung (52) vorhanden ist.

2. Vorrichtung nach Anspruch 1, bei der eines der vorderen Abschlußteile (30) als Bedienelement eine Eingabevorrichtung (31) sowie eine alphanumerische Anzeige (32) enthält.

3. Vorrichtung nach Anspruch 1, bei der eines der vorderen Abschlußteile (40) als Bedienelemente eine Eingabevorrichtung (42) und eine graphische Anzeige (43) enthält.

4. Vorrichtung nach Anspruch 1, bei der eines der hinteren Abschlußteile (41) Ein- und/oder Ausgabevorrichtungen enthält.

5. Vorrichtung nach Anspruch 1, bei der die vorderen Abschlußteile (12, 30, 40) und/oder die hinteren Abschlußteile (13, 41) mittels Schnappverschlüssen (50, 51) jeweils mit dem Gehäuse (11) verbindbar sind.

6. Vorrichtung nach Anspruch 1, bei der zwischen den in den Abschlußteilen (30, 409, 41) angeordneten elektronischen Komponenten und der im Gehäuse (11) angeordneten signalverarbeitenden Anordnung (55) eine drahtlose Signalübertragung vorhanden ist.

7. Vorrichtung nach Anspruch 1, bei der das Gehäuse (11) eine Aufhängevorrichtung (22) aufweist.

## Claims

1. Portable device for testing mechanical or electrical components having
- a carrying frame (14), which contains a storage facility for the sensors with lines (17) or for miniature components,
- a housing (11) which is connected to the carrying frame (14) by means of rotary bearings (15) and which contains a front terminating component (12, 30, 40) and a rear terminating component (13, 41),
- a signal-processing arrangement (55), arranged in the housing (11), for processing a signal output by at least one sensor,
- the front terminating component (12, 30, 40) and/or the rear terminating component (13, 41) being capable of being replaced at least partially with other terminating components,
- the device comprising interchangeable terminating components (12, 30, 40; 13, 41) in different extension levels with control elements (31, 32, 42, 43) such as input devices, output devices and/or display devices, each with different functions,
- and a signal coupling (52) being present between terminating components (30, 40; 41) which contain control elements (31, 32, 42, 43) and the signal-processing arrangement (55).

2. Device according to Claim 1 in which one of the front terminating components (30) contains as control element an input device (31) as well as an alphanumeric display (32).

3. Device according to Claim 1 in which one of the front terminating components (40) contains as control element an input device (42) and a graphic display (43).

4. Device according to Claim 1, in which one of the rear terminating components (41) contains input devices and/or output devices.

5. Device according to Claim 1, in which the front terminating components (12, 30, 40) and/or the rear terminating components (13, 41) can each be connected to the housing (11) by means of snap-on closures (50, 51).

6. Device according to Claim 1, in which a wireless signal transmission is present between the electronic components arranged in the terminating components (30, 409, 41) and the signal-processing arrangement (55) arranged in the housing (11).

7. Device according to Claim 1, in which the housing (11) has a suspension device (22).

## Revendications

1. Dispositif portatif de contrôle d'organes mécaniques ou électriques comportant :
- un châssis porteur (14) présentant une surface pour y déposer des détecteurs et leurs conducteurs (11) ou de petites pièces,
- un boîtier (11) relié au châssis (14) par des paliers de rotation (15) et fermé par une façade avant (12, 30, 40) et une façade arrière (13, 41),
- un dispositif (55) de traitement de signaux, monté dans le boîtier et traitant un signal fourni par au moins un détecteur,
ce dispositif présentant les caractéristiques suivantes :
- la façade avant (12, 30, 40) et/ou la façade arrière (13, 41) de fermeture peut (ou peuvent) être échangée(s), au moins partiellement, contre d'autres façades de fermeture,
- le dispositif comprend des façades interchangeables (12, 30, 40 ; 13, 41) portant à des degrés divers des éléments de réglage (31, 32, 42, 43) correspondant à des fonctions différentes, tels que introduction de données, délivrance d'informations et/ou d'indications,
- un correcteur de transmission des signaux (52) est intercalé entre les façades (30, 40, 41) contenant les éléments de commande et du dispositif (55) de traitement du signal.

2. Dispositif selon la revendication 1, caractérisé en ce que les éléments de commande d'une des façades de fermeture avant (30) sont un dispositif d'introduction (31) de données complété par un indicateur alphanumérique (32).

3. Dispositif -selon la revendication 1, caractérisé en ce que des éléments de commande d'une des façades de fermeture avant (40) sont un dispositif d'introduction (42)de données complété par un affichage graphique (43).

4. Dispositif selon la revendication 1, caractérisé en ce qu'une des façades de fermeture arrière (41) contient des dispositifs d'introduction et/ou de sortie de données.

5. Dispositif selon la revendication 1, caractérisé en ce que les façades de fermeture avant (12, 30, 40) et/ou arrière (13, 41) peuvent être fixées au boîtier (50, 51) par des verrous à encliquetage.

6. Dispositif selon la revendication 1, caractérisé en ce qu'une transmission sans fil des signaux relie les composants électroniques contenus dans les façades de fermeture (30, 409, 41) à l'appareil de traitement des signaux (55) monté dans le boîtier (11).

7. Dispositif selon la revendication 1, caractérisé en ce que le boîtier est équipé d'un dispositif de suspension (22).
